# EUROPEAN PATENT APPLICATION

(11) **EP 4 803 368 A1**
(43) Date of publication of application: **09.09.2026**
(21) Application number: 25189976.1
(22) Date of filing: 16.07.2025
(51) Int. Cl.: B60P 7/08, F16B 45/00

(54) **CONVENIENTLY OPERATED MAGNETIC SAFETY FASTENER**

(30) Priority: 05.03.2025 CN 202520374256 U
(71) Applicant: Taizhou Runjie Logistics Safety Equipment Science and Technology Co., Ltd., Taizhou, Jiangsu 225300 (CN)
(72) Inventor: ZHOU, Jing, Taizhou, Jiangsu 225300 (CN); YANG, Xianwei, Taizhou, Jiangsu 225300 (CN); LI, Chunzhi, Taizhou, Jiangsu 225300 (CN)
(74) Representative: Cabinet Chaillot

(57) **Abstract**

A conveniently operated magnetic safety fastener, comprising an S-shaped hook and a magnet buckle, the S-shaped hook and the magnet buckle are used in combination, the S-shaped hook comprises a fixed end and a clamping end; the magnet buckle is located at a fixed end of the S-shaped hook, and the magnet buckle comprises a mounting buckle, a magnet and a fixing buckle. The fixed end of the S-shaped hook and the magnet buckle adopt a split design. The mounting buckle and the fixing buckle are connected through the coordination of the clamping blocks and the clamping block mounting through holes, and the fixed connection using cross screws. The operation is simple, the installation efficiency is high, and no complicated tools or professional skills are required for easy installation. The magnet buckle is firmly secured in the fixed end of the S-shaped hook by the fixed end mounting groove.

## Description

### 1. Technical Field

The invention relates to the technical field of fasteners, in particular to a conveniently operated magnetic safety fastener.

### 2. Background Art

In today's cargo transportation, hoisting, and outdoor fixation operations, the safety, convenience, and reliability of related equipment have always been the key focus of the industry. In the field of cargo transportation, in order to ensure the stability of goods during the transport process and prevent shifting or falling, various fastening devices are often required. In application scenarios where various objects are hung and fixed, traditional hanging devices expose a series of problems that need to be solved urgently. Currently, most common fasteners are of a single structure, lacking effective coordination with other components. Their fastening methods are simplistic and crude, which makes them time-consuming and labor-intensive to use in practice, and they also exhibit poor stability. Ordinary fasteners perform poorly in terms of load-bearing capacity. When hanging heavy objects, due to the absence of effective fastening measures, the fasteners are prone to displacement or even detachment, resulting in damage to the objects and posing significant safety hazards. In addition, ordinary fasteners have relatively limited functions and are unable to meet the diverse needs of users.

### 3. Summary of the Invention

In response to the above problems, the invention proposes a conveniently operated magnetic safety fastener,

The specific technical solution is as follows:
a conveniently operated magnetic safety fastener, comprising an S-shaped hook and a magnet buckle, wherein the S-shaped hook and the magnet buckle are used in combination, the S-shaped hook comprises a fixed end and a clamping end; the magnet buckle is located at a fixed end of the S-shaped hook, and the magnet buckle comprises a mounting buckle, a magnet and a fixing buckle.

Preferably, a magnet mounting base and buckle mounting bases are arranged on an inner side of the mounting buckle, the number of the buckle mounting bases is two, and a clamping block is arranged on each of the buckle mounting bases.

Preferably, the fixing buckle is provided with fixing bases, a magnet fixing base and a fixed end mounting groove, the number of the fixing bases is two, and a clamping block mounting through hole is arranged on each of the fixing bases.

Preferably, the fixing bases of the fixing buckle are used in conjunction with the buckle mounting bases of the mounting buckle; the clamping blocks on the buckle mounting bases are clamped into the clamping block mounting through holes on the fixing bases.

Preferably, the mounting buckle and the fixing buckle are both provided with screw mounting through holes; the fixed end mounting groove of the fixing buckle is clamped on the fixed end of the S-shaped hook; the mounting buckle is fixedly connected to the fixing buckle by cross screws.

Preferably, the magnet mounting base of the mounting buckle and the magnet fixing base of the fixing buckle are both provided with magnet mounting grooves, and the magnet is installed in the magnet mounting grooves.

The advantageous effects of the invention are as follows:
the invention provides the conveniently operated magnetic safety fastener. The fixed end of the S-shaped hook and the magnet buckle adopt a split design. The mounting buckle and the fixing buckle are connected through the coordination of the clamping blocks and the clamping block mounting through holes, as well as the fixed connection using cross screws. The operation is simple, the installation efficiency is high, and no complicated tools or professional skills are required for easy installation. The magnet buckle is firmly secured in the fixed end of the S-shaped hook by the fixed end mounting groove, while the magnet is installed in the magnet mounting grooves of both the mounting buckle and the fixing buckle, enhancing the overall adsorption force and stability. This ensures that the fastener is more secure when hanging items, preventing accidental detachment. It is convenient, aesthetically pleasing, safe, and reliable.

### 4. Brief Description of Accompanying Drawings

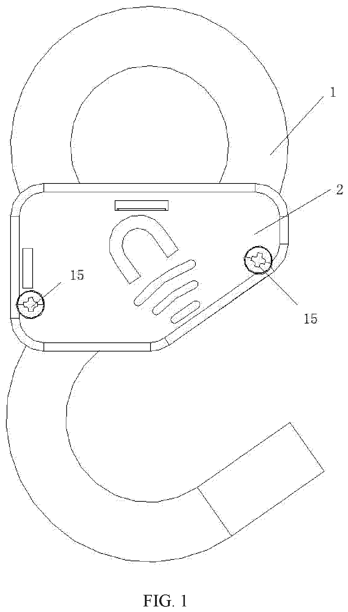

FIG. 1 is a schematic diagram of the overall structure of the invention.

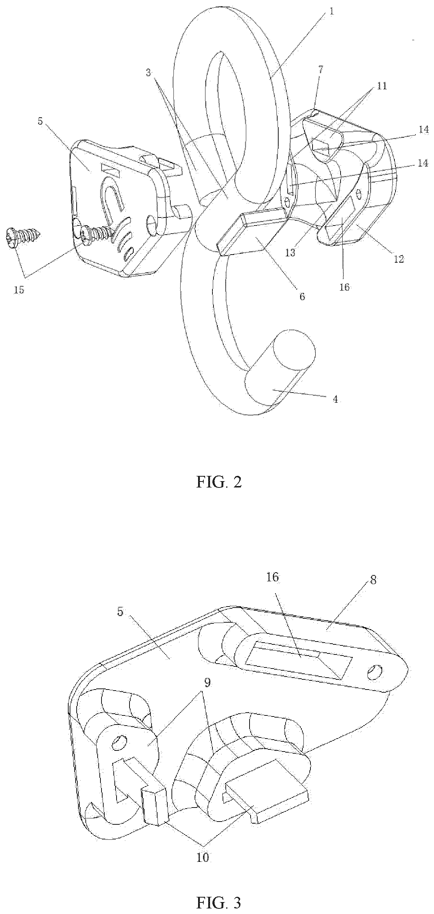

FIG. 2 is an explosion diagram of the invention.
FIG. 3 is a schematic diagram of the structure of mounting buckle of the invention.

In the figures: 1 S-shaped hook, 2 magnet buckle, 3 fixed end, 4 clamping end, 5 mounting buckle, 6 magnet, 7 fixing buckle, 8 magnet mounting base, 9 buckle mounting base, 10 clamping block, 11 fixing base, 12 magnet fixing base, 13 fixed end mounting groove, 14 clamping block mounting through hole, 15 cross screw, 16 magnet mounting groove.

### 5. Specific Embodiment of the invention

In order to make the technical solution of the invention clearer and more specific, the invention is further described below in conjunction with the accompanying drawings. Any equivalent replacement of the technical features of the technical solution of the invention and any solution derived by conventional reasoning shall fall within the protection scope of the invention.

The technical solution in the embodiments of the invention will be clearly and completely described in combination with the accompanying drawings in the embodiments of the invention. Obviously, the described embodiments are only some of the embodiments of the invention, but not all of the embodiments. The following description of at least one exemplary embodiment is merely illustrative in nature and is not intended to limit the invention or its application or uses. Based on the embodiments in this invention, all other embodiments obtained by those of ordinary skill in the art without making creative efforts shall fall within the protection scope of this invention.

In the description of the invention, it should be understood that the orientation or positional relationship indicated by the terms "up", "middle", "outside", "inside", "below", "around", " and so on are based on the orientation or positional relationship shown in the accompanying drawings, only for the convenience of describing the invention and simplifying the description, rather than indicating or implying that the indicated device or element must have a specific orientation, as well as a specific orientation structure and operation, therefore, it should not be construed as a limitation of the invention.

A conveniently operated magnetic safety fastener, comprising an S-shaped hook 1 and a magnet buckle 2, wherein the S-shaped hook 1 and the magnet buckle 2 are used in combination, the S-shaped hook 1 comprises a fixed end 3 and a clamping end 4; the magnet buckle 2 is located at a fixed end 3 of the S-shaped hook 1, and the magnet buckle 2 comprises a mounting buckle 5, a magnet 6 and a fixing buckle 7.

A magnet mounting base 8 and buckle mounting bases 9 are arranged on an inner side of the mounting buckle 5, the number of the buckle mounting bases 9 is two, and a clamping block 10 is arranged on each of the buckle mounting bases 9.

The fixing buckle 7 is provided with fixing bases 11, a magnet fixing base 12 and a fixed end mounting groove 13, the number of the fixing bases 11 is two, and a clamping block mounting through hole 14 is arranged on each of the fixing bases 11; the fixing bases 11 of the fixing buckle 7 are used in conjunction with the buckle mounting bases 9 of the mounting buckle 5; the clamping blocks 10 on the buckle mounting bases 9 are clamped into the clamping block mounting through holes 14 on the fixing bases 11.

The mounting buckle 5 and the fixing buckle 7 are both provided with screw mounting through holes; the fixed end mounting groove 13 of the fixing buckle 7 is clamped on the fixed end 3 of the S-shaped hook 1; the mounting buckle 5 is fixedly connected to the fixing buckle 7 by cross screws 15.

The magnet mounting base 8 of the mounting buckle 5 and the magnet fixing base 12 of the fixing buckle 7 are both provided with magnet mounting grooves 16, and the magnet 6 is installed in the magnet mounting grooves 16.

The invention provides the conveniently operated magnetic safety fastener. The fixed end of the S-shaped hook and the magnet buckle adopt a split design. The mounting buckle and the fixing buckle are connected through the coordination of the clamping blocks and the clamping block mounting through holes, as well as the fixed connection using cross screws. The operation is simple, the installation efficiency is high, and no complicated tools or professional skills are required for easy installation. The magnet buckle is firmly secured in the fixed end of the S-shaped hook by the fixed end mounting groove, while the magnet is installed in the magnet mounting grooves of both the mounting buckle and the fixing buckle, enhancing the overall adsorption force and stability. This ensures that the fastener is more secure when hanging items, preventing accidental detachment. It is convenient, aesthetically pleasing, safe, and reliable. Compared with traditional fasteners, the assembly of the invention is more convenient. This fastener with the magnet utilizes the structural characteristics of the S-shaped hook to hang items, also leverages the magnetic adsorption function, making it suitable for use on various metal surfaces, showcasing its practical and convenient features.

The above is only a preferred specific implementation of the invention, but the protection scope of the invention is not limited to this. Any changes or replacements that can be easily thought of by any technician familiar with the technical field within the technical scope provided by the invention should be included in the protection scope of the invention. Therefore, the protection scope of the invention should be based on the protection scope of the claims.

## Claims

1. A conveniently operated magnetic safety fastener, comprising an S-shaped hook (1) and a magnet buckle (2), wherein the S-shaped hook (1) and the magnet buckle (2) are used in combination, the S-shaped hook (1) comprises a fixed end (3) and a clamping end (4); the magnet buckle (2) is located at a fixed end (3) of the S-shaped hook (1), and the magnet buckle (2) comprises a mounting buckle (5), a magnet (6) and a fixing buckle (7).

2. The conveniently operated magnetic safety fastener of claim 1, wherein a magnet mounting base (8) and buckle mounting bases (9) are arranged on an inner side of the mounting buckle (5), the number of the buckle mounting bases (9) is two, and a clamping block (10) is arranged on each of the buckle mounting bases (9).

3. The conveniently operated magnetic safety fastener of claim 1, wherein the fixing buckle (7) is provided with fixing bases (11), a magnet fixing base (12) and a fixed end mounting groove (13), the number of the fixing bases (11) is two, and a clamping block mounting through hole (14) is arranged on each of the fixing bases (11).

4. The conveniently operated magnetic safety fastener of claim 3, wherein the fixing bases (11) of the fixing buckle (7) are used in conjunction with the buckle mounting bases (9) of the mounting buckle (5); the clamping blocks (10) on the buckle mounting bases (9) are clamped into the clamping block mounting through holes (14) on the fixing bases (11).

5. The conveniently operated magnetic safety fastener of claim 1, wherein the mounting buckle (5) and the fixing buckle (7) are both provided with screw mounting through holes; the fixed end mounting groove (13) of the fixing buckle (7) is clamped on the fixed end (3) of the S-shaped hook (1); the mounting buckle (5) is fixedly connected to the fixing buckle (7) by cross screws (15).

6. The conveniently operated magnetic safety fastener of claim 1, wherein the magnet mounting base (8) of the mounting buckle (5) and the magnet fixing base (12) of the fixing buckle (7) are both provided with magnet mounting grooves (16), and the magnet (6) is installed in the magnet mounting grooves (16).
